# EUROPÄISCHE PATENTANMELDUNG

(11) **EP 1 031 463 A2**
(43) Veröffentlichungstag der Anmeldung: **30.08.2000**
(21) Anmeldenummer: 00102735.8
(22) Anmeldetag: 10.02.2000
(51) Int. Cl.: B60Q 3/02

(54) **Leseleuchte**

(30) Priorität: 24.02.1999 DE 19907815
(71) Anmelder: Hella KG Hueck & Co., 59552 Lippstadt (DE)
(72) Erfinder: Herrmann, Georg, Dr., 72108 Rottenburg (DE)

(57) **Zusammenfassung**

Leseleuchte, insbesondere zum Einbau in einem Fahrzeughimmel, mit einer Lichtaustrittsöffnung (5,5',5") in einer einem Fahrzeuginnenraum zugewandten Wandung (1) und einer der Wandung (1) vorgelagerten Leuchte (3,3',3"), deren Licht in einem der Leuchte vorgelagerten Brennfleck (17,17',17") gebündelt wird, wobei die Leuchte (3,3',3") seitlich von der Lichtaustrittsöffnung (5,5',5") angeordnet ist und wobei zwischen Leuchte (3,3',3") und Lichtaustrittsöffnung (5,5',5") ein das Licht (16,16',16") auf die Lichtaustrittsöffnung (5,5',5") lenkender Reflektor (4,4',4") angeordnet ist.

## Beschreibung

Die Erfindung betrifft eine Leseleuchte, insbesondere zum Einbau in einen Fahrzeughimmel, mit einer Lichtaustrittsöffnung in einer einem Fahrzeuginnenraum zugewandten Wandung und einer der Wandung vorgelagerten Leuchte, deren Licht in einem der Leuchte vorgelagerten Brennfleck gebündelt wird.

Es sind Leseleuchten bekannt, die in einem Dachhimmel eines Kraftfahrzeuges oder auch oberhalb eines Sitzes in einem Flugzeuginnenraum in eine dem Fahrzeuginnenraum bzw. dem Passagierraum des Flugzeuges zugewandte Wandung eingebaut werden. Der Wandung ist auf einer dem Fahrzeuginnenraum abgewandten Seite eine Leuchte vorgelagert, deren Licht aus einer Lichtaustrittsöffnung der Wandung austritt und in einem der Leuchte vorgelagerten Brennflecke bzw. Brennpunkt gebündelt wird. Hierzu werden Lampen verwendet, die von einem das Licht der Lampe bündelnden Ellipsoidreflektor umgeben sind.

Nachteilig bei der bekannten Leuchte ist, daß die Leuchte, um eine geringe Bautiefe zu erzielen, der Lichtaustrittsöffnung unmittelbar vorgelagert sein muß, was zur Folge hat, daß die Lichtaustrittsöffnung einen relativ großen Durchmesser haben muß, der in etwa dem Durchmesser des Lampenreflektors entspricht. Gleichzeitig entsteht eine unerwünscht hohe Streustrahlung, die zu einer unerwünschten Blendung von der Leuchte benachbarten Personen führen kann.

Weiterhin ist aus der DE 196 52 095 A1 eine Leseleuchte bekannt, bei der in einem Lichtleiter eingespiegeltes Licht von einem Umlenkelement abgewinkelt und über eine in einer Lichtaustrittsöffnung angeordneten Linse einem Fahrzeuginnenraum zugeführt wird. Auch bei dieser Leseleuchte kann es zu unerwünschtem Streulicht und einer damit verbundenen Blendung kommen. Auch treten hier Lichtverluste bei der Einspiegelung in den Lichtleiter auf, die durch eine höhere Leistung der Lampe ausgeglichen werden müssen.

Aufgabe der vorliegenden Erfindung ist es daher, eine Leseleuchte zu schaffen, die kleine Lichtaustritte bei geringer Bautiefe ermöglicht und zu einer hohen Blendfreiheit führt.

Die Aufgabe wird dadurch gelöst, daß die Leuchte seitlich von der Lichtaustrittsöffnung angeordnet ist und daß zwischen Leuchte und Lichtaustrittsöffnung ein das Licht auf die Lichtaustrittsöffnung lenkender Reflektor angeordnet ist.

Durch die seitliche Anordnung der Leuchte kann der Bauraum genutzt werden, um das von der Leuchte ausgestrahlte Licht zu bündeln und auf den Reflektor zu lenken. Bei einer nunmehr möglichen Schrägstellung der optischen Achse in dem Bauraum kann der Reflektor unter Ausnutzung der Bautiefe in einem relativ großen Abstand zur Lichtaustrittsöffnung angeordnet werden. Weiter ist es möglich, das Licht so zu bündeln, daß die Lichtaustrittsöffnung einen relativ geringen Außendurchmesser aufweisen kann. Durch die gezielte Lichtbündelung innerhalb des Bauraumes und durch die Blendwirkung der Lichtaustrittsfläche wird ein streulichtarmer und damit relativ blendfreier Lichtkegel erzeugt.

In einer bevorzugten Ausführungsform der Erfindung beeinflußt der Reflektor durch eine entsprechende Wölbung seiner Reflexionsfläche den Raumwinkel des von ihm als Lichtkegel reflektierten Lichtes der Leuchte.

Um die Leuchte bzw. den über die Lichtaustrittsöffnung abgestrahlten Lichtkegel auf die vorgebbaren Parameter wie maximale Einbautiefe und maximaler Durchmesser der Lichtaustrittsöffnung unter Berücksichtigung der Blendfreiheit anzupassen, kann der Reflektor durch eine entsprechende Wölbung seiner Reflektionsfläche dem Raumwinkel des Lichtkegels beeinflussen. So kann der Raumwinkel beispielsweise durch eine konvexe Wölbung der Reflextionsfläche vergrößert und durch eine konkave Wölbung der Reflexionsfläche verkleinert werden. Es ist aber grundsätzlich auch möglich, die Reflektionsfläche plan auszubilden. Die Anordnung und Ausbildung des Reflektors ist auf die Leuchte abgestimmt. Dies ermöglicht eine größere Flexibilität bei der Anpassung der Leseleuchte auf den jeweiligen Anwendungsfall.

Nach einer weiteren bevorzugten Ausführungsform der Erfindung weist die Reflexionsfläche des Reflektors eine die Homogenität des Lichtkegels verbessernde Oberflächenstruktur auf.

Durch eine leicht strukturierte Oberfläche wird die Exaktheit der Lichtabbildung etwas aufgeweicht, wodurch die Beleuchtungsstärke der Lesefläche bzw. der beleuchteten Fläche homogener wird.

Gemäß einer weiteren bevorzugten Ausführungsform der Erfindung ist der Brennfleck zwischen Reflektor und Lichtaustrittsöffnung angeordnet.

Dadurch, daß der Brennfleck des von der Leuchte erzeugten Lichtes bzw. Lichtbündels zwischen Reflektor und Lichtaustrittsöffnung angeordnet ist, wird ein Brennfleck mit einer entsprechenden Erwärmung innerhalb des Fahrzeuginnenraumes vermieden, so daß es dort auch nicht zu unerwünschten Verbrennungen kommen kann.
Grundsätzlich ist es aber auch möglich, den Brennfleck zwischen Leuchte und Reflektor anzuordnen. Weiter ist es möglich, keinen ausgeprägten Brennfleck entstehen zu lassen, wenn nämlich der Reflektor eine lichtspreizende Wirkung ausübt, die stärker ist als die lichtbündelnde Wirkung des Lampenreflektors.

Gemäß einer weiteren bevorzugten Ausführungsform der Erfindung ist zwischen Reflektor und Lichtaustrittsöffnung ein Streulicht absorbierendes Abschirmteil angeordnet, das als tubusförmiges Formteil mit einer mattierten, dunklen, dem Lichtkegel zugewandten Oberfläche ausgebildet ist.

Durch die Verwendung des streulichtabsorbierenden Formteiles wird das Auftreten von Streulicht weiter vermindert und somit die Blendfreiheit erhöht.

Nach einer weiteren bevorzugten Ausführungsform der Erfindung weist die Leuchte eine Glühlampe auf, deren Licht von einem die Glühlampe umgebenden Lampenreflektor in dem Brennfleck gebündelt wird.

Durch die Verwendung einer Glühlampe mit einem die Glühlampe umgebenden Lampenreflektor, der beispielsweise als Ellipsoidreflektor ausgebildet ist, wird auf einfache Weise eine lichtstarke Bündelung des von der Lampe erzeugten Lichtes erreicht. Um die Bautiefe etwa zu verringern, kann der Reflektor schräg angeschnitten werden.

Gemäß einer weiteren Ausführungsform der Erfindung erstreckt sich der Lampenreflektor unter Ausnutzung der Bautiefe zwischen der Wandung und der oberen Begrenzung und ist derart gerichtet, daß das an dem Lampenreflektor reflektierte Licht vollständig auf den Reflektor trifft. Dadurch, daß der Reflektor einerseits geneigt zur Abstrahlrichtung der Lampe und andererseits einen Teil des von der Lampe direkt abgestrahlten Lichtkegels ausfüllt, wird eine weitere Erhöhung der Lichtausbeute erzielt. Weiterhin kann durch die räumlich abgestimmte Anordnung der Lampe zu dem Reflektor auf einfache Weise eine den Erfordernissen gerecht werdende hohe Beleuchtungsstärke bei kleiner Lichtaustrittsöffnung erzielt werden.

Gemäß einer weiteren bevorzugten Ausführungsform der Erfindung weist die Leuchte eine Mehrzahl von Leuchtdioden auf, die räumlich so angeordnet sind, daß ihr Licht in dem Brennfleck gebündelt wird.

Durch die Verwendung von Leuchtdioden wird eine hohe Lichtausbeute bei geringer Wärmeentwicklung erreicht. Die Leuchtdioden können beispielsweise auf einer Schale angeordnet werden, die eine reflektorähnliche Form aufweist.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
Figur 1: Eine vereinfachte Seitenansicht einer Leseleuchte im Schnitt
Figur 2: eine vereinfachte Seitenansicht einer Leseleuchte mit abgeschnittenem Reflektor im Schnitt und
Figur 3: eine Seitenansicht einer Leseleuchte mit einer aus Leuchtdioden gebildeten Leuchte.

Eine Leseleuchte besteht im wesentlichen aus einer Wandung 1, einer oberen Begrenzung 2, einer Leuchte 3 und einem Reflektor 4.

Die Wandung 1 wirkt zu einem nicht weiter dargestellten Fahrzeuginnenraum hin als untere Begrenzung und weist eine Lichtaustrittsöffnung 5 auf. In einem die Bautiefe eines Bauraumes 27 bestimmenden Abstand 6 ist etwa parallel zur Wandung 1 eine obere Begrenzung 2 angeordnet. Die obere Begrenzung 2 kann beispielsweise von einem Karosserieblech gebildet werden. In einem seitlichen Abstand 8 zu der Lichtaustrittsöffnung 5 ist die Leuchte 3 angeordnet.

Die Leuchte 3 besteht aus einer Lampe 9, die beispielsweise als eine Quetschsockelglühlampe ausgebildet ist, und aus einem Lampenreflektor 10. Der Lampenreflektor 10 ist als Ellipsoidreflektor ausgebildet, in dessem ersten Brennpunkt 11 die Glühwendel der Lampe 9 angeordnet ist. Das von der Lampe 9 ausgesandte Licht wird von dem Lampenreflektor 10 in seinem zweiten Brennpunkt 12 gebündelt. Die Lampe 9 weist eine optische Achse 13 auf, die in einem spitzen Winkel 14, zu einer Normalen 15 auf die Lichtaustrittsöffnung 5 angeordnet ist. Der Wandung 1 ist in der Nähe der oberen Begrenzung 2 der Reflektor 4 vorgelagert. Der Reflektor 4 ist dabei so angeordnet, daß das Licht 16 der Leuchte 3 auf die Lichtaustrittsöffnung 5 gelenkt bzw. projiziert wird. Das von der Leuchte 3 ausgestrahlte Licht 16 wird von dem Reflektor 4 reflektiert, wobei der zweite Brennpunkt 12 der Lampe 9 mitreflektiert wird, so daß das Licht 16 der Lampe 9 in einem gespiegelten zweiten Brennpunkt 12 zu einem Brennfleck 17 gebündelt wird und als Lichtkegel 18 durch die Lichtaustrittsöffnung 5 austritt. Der Lichtkegel 18 weist einen Raumwinkel 19 auf. Der Reflektor 4 weist eine Reflexionsfläche 20 auf, die konvex gewölbt ist. Durch die konvexe Wölbung der Reflexionsfläche 20 wird der Raumwinkel 19 des Lichtkegels 18 vergrößert.

Die Reflexionsfläche 20 des Reflektors 4 weist eine Oberflächenstruktur auf, die durch ihre Strukturierung die Homogenität des Lichtkegels 18 erhöht.

Zwischen Reflektor 4 und Lichtaustrittsöffnung 5 ist ein Abschirmteil 21 angeordnet. Das Abschirmteil 21 ist als tubusförmiges Formteil ausgebildet, welches die Lichtaustrittsöffnung 5 bzw. den Lichtkegel 18 umschließt. Die dem Lichtkegel 18 zugewandte Oberfläche 22 ist schwarz mattiert ausgebildet.

Nach einer anderen Ausführungsform ist der Lampenreflektor 10' der Leuchte 3' in vertikaler Richtung unten, d. h. zur Wandung 1' hin, und in vertikaler Richtung oben, d. h. zur oberen Begrenzung 2' hin, nicht voll ausgebildet bzw. abgeschnitten, so daß der Abstand 6' zwischen Wand 1' und oberer Begrenzung 2' verringert werden kann.
Der Reflektor 4' weist eine plane, nicht gewölbte Reflexionsfläche 20' auf, die den Raumwinkel 19' des Lichtkegels 18' gegenüber dem reflektierten Licht 16' der Leuchte 3' bildet.

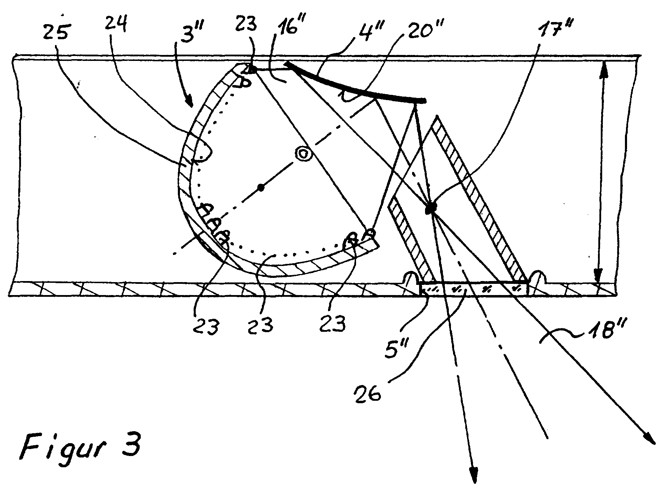

Nach einer anderen Ausführungsform gemäß Figur 3 weist die Leuchte 3'' eine Mehrzahl von Leuchtdioden 23 auf. Als Leuchtdioden 23 werden weißes Licht ausstrahlende Lumineszenzdioden (LED) verwendet. Die Leuchtdioden 23 sind auf der Innenseite 24 einer reflektorähnlichen Schale 25 so angeordnet, daß das von den Leuchtdioden 23 ausgestrahlte Licht 16'' in einen Brennfleck 17'' gebündelt wird. Die Lichtaustrittsöffnung 5'' weist eine Abdeckung 26 aus einem transparenten Material auf.

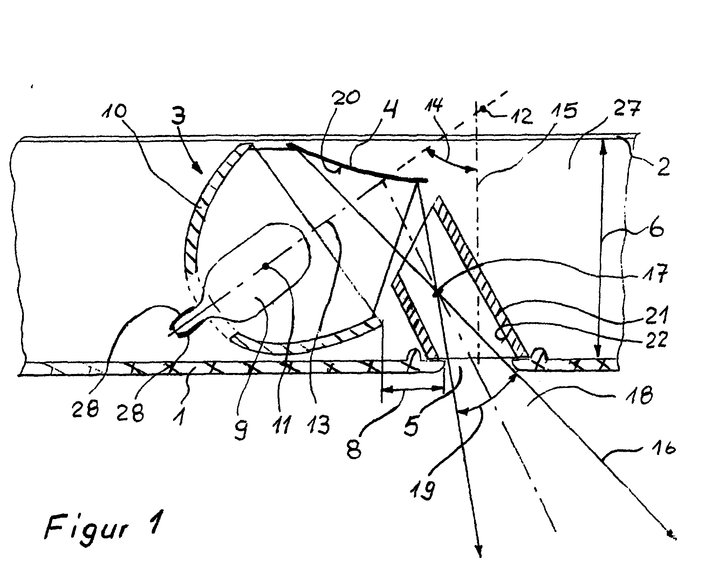

Bei einem Beispiel nach Figur 1 beträgt die Einbautiefe bzw. der Abstand 6 zwischen Wandung 1 und oberer Begrenzung 2 32 mm. Die Lichtaustrittsöffnung 5 weist einen Durchmesser von 10 mm auf. Die Leuchte 3 weist als Lampe 9 eine W5W-Quetschsockelglühlampe von 5 Watt elektrischer Leistung auf, die einen Lichtstrom von etwa 50 Lumen erzeugt. Ihre elektrische Versorgung erfolgt in bekannter Weise über zwei Kontakte 28. Alternativ kann als Glühlampe eine W5WX-Glühlampe mit 85 Lumen oder aber mit anderer Fassung eine Glühlampe mit BA9-Sockel vom Typ T4W, T5W, H5W, H6W oder H10W eingesetzt werden. Die obere Begrenzung 2 wird vom Dachblech der Karosserie gebildet und die Wandung 1 wird von einem Kunststoffaußengehäuse der Leseleuchte oder dem Sichtteil einer Dachkonsole gebildet. Der Lampenreflektor 10 besteht aus einem wärmebeständigen Material (Metall oder Kunststoff, z. B. PC oder PEI), dessen Oberfläche einen hohen Reflexionsgrad von größer als 95 % aufweist, so daß der Reflektor 4 mindestens 60 % des gesamten von der Lampe 9 ausgehenden Lichtstromes sammelt und bündelt. Vom Lampenreflektor 10 wird das Licht 16 auf den Reflektor 4 gerichtet, der das Licht 16 in Richtung einer zu beleuchtenden Lesefläche weiterleitet. Der Reflektor 4 fängt das gesamte vom Lampenreflektor 10 ausgehende Licht 16 auf, wobei infolge der Bündelungswirkung des Lampenreflektors 10 der Reflektors 4 nur einen kleineren Teil der zur Verfügung stehenden Bautiefe bzw. des Abstandes 6 in Anspruch nimmt. Wie der Lampenreflektor 10 besteht der Reflektor 4 aus einem wärmebeständigen Material mit einem hohen Reflexionsvermögen. Das Licht 16 wird als Lichtkegel 18 durch das Abschirmteil 21 über die Lichtaustrittsöffnung 5 zu der nicht dargestellten Lesefläche geleitet. Eventuelles Streulicht wird von der Oberfläche 22 durch das Abschirmteil 21 absorbiert. Das Abschirmteil 21 ist als tubusförmiges Kunststoffspritzteil aus wärmebeständigem Material, beispielsweise aus schwarz eingefärbtem PC oder schwarzem PEI, mit mattierter Oberfläche ausgebildet.

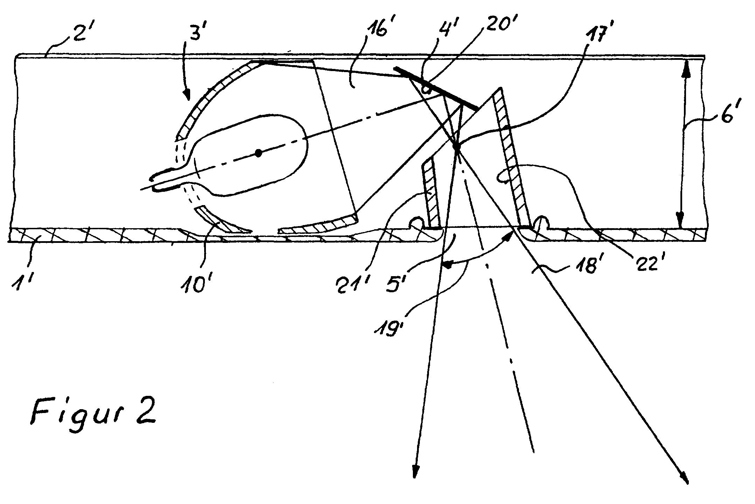

Figur 2 weist ein der Figur 1 entsprechendes Beispiel mit einem Abstand 6' der Wandung 1 von der oberen Begrenzung 2' von 25 mm auf.

## Patentansprüche

1. Leseleuchte, insbesondere in einem Fahrzeughimmel, mit einer Lichtaustrittsöffnung in einer einem Fahrzeuginnenraum zugewandten Wandung und einer der Wandung vorgelagerten Leuchte, deren Licht in einem der Leuchte vorgelagerten Brennfleck gebündelt wird, dadurch gekennzeichnet, daß die Leuchte (3, 3', 3'') seitlich von der Lichtaustrittsöffnung (5, 5', 5'') angeordnet ist und daß zwischen Leuchte (5, 5', 5'') und Lichtaustrittsöffnung (5, 5', 5'') ein das Licht (16, 16', 16'') auf die Lichtaustrittsöffnung (5, 5', 5'') lenkender Reflektor (4, 4', 4'') angeordnet ist.

2. Leseleuchte nach Anspruch 1, dadurch gekennzeichnet, daß der Reflektor (4, 4', 4'') durch eine entsprechende Wölbung seiner Reflexionsfläche (20, 20', 20'') den Raumwinkel (19, 19', 19'') des von ihm als Lichtkegel (18, 18', 18'') reflektierten Lichtes (16, 16', 16'') der Leuchte (3, 3', 3'') beeinflußt.

3. Leseleuchte nach Anspruch 1 oder 2, dadurch gekennzeichnet, daß die Reflexionsfläche (20, 20', 20'') des Reflektors (4, 4', 4'') eine die Homogenität des Lichtkegels (18, 18', 18'') verbessernde Oberflächenstruktur aufweist.

4. Leseleuchte nach einem der Ansprüche 1 bis 3, dadurch gekennzeichnet, daß der Brennfleck (17, 17', 17'') zwischen Reflektor (4, 4', 4'') und Lichtaustrittsöffnung (5, 5', 5'') angeordnet ist.

5. Leseleuchte nach einem der Ansprüche 1 bis 3, dadurch gekennzeichnet, daß zwischen Reflektor (4, 4', 4'') und Lichtaustrittsöffnung (5, 5', 5'') ein Streulicht absorbierendes Abschirmteil (21, 21') angeordnet ist.

6. Leseleuchte nach Anspruch 5, dadurch gekennzeichnet, daß das Abschirmteil (21, 21') als tubusförmiges Formteil mit einer mattierten, dunklen, dem Lichtkegel (18, 18', 18'') zugewandten Oberfläche (22, 22') ausgebildet ist.

7. Leseleuchte nach einem der Ansprüche 1 bis 6, dadurch gekennzeichnet, daß die Lichtaustrittsöffnung (5'') eine Abdeckung (26) aus einem transparenten Material aufweist.

8. Leseleuchte nach Anspruch 7, dadurch gekennzeichnet, daß die Abdeckung (26) eine optisch wirksame Oberflächenstruktur aufweist.

9. Leseleuchte nach einem der Ansprüche 1 bis 8, dadurch gekennzeichnet, daß die Leuchte (3, 3') eine Lampe (9) aufweist, deren Licht (16, 16') von einem die Lampe (9) umgebenden Lampenreflektor (10, 10') in dem Brennfleck (17, 17') gebündelt wird.

10. Leseleuchte nach einem der Ansprüche 1 bis 9, dadurch gekennzeichnet, daß sich der Lampenreflektor (10, 10') zwischen der Wandung (1) und der oberen Begrenzung (2) derart erstreckt, daß das eine optische Achse (13) der Lampe (9) einen Schnittpunkt mit dem Reflektor (4,4') bildet und daß das von der Lampe (9) ausgesandte und von dem Lampenreflektor (10, 10') reflektierte Licht (16,16') vollständig auf den Reflektor (4, 4') trifft.

11. Leseleuchte nach einem der Ansprüche 1 bis 8, dadurch gekennzeichnet, daß die Leuchte (3'') eine Mehrzahl von Leuchtdioden (23) aufweist, die räumlich so angeordnet sind, daß ihr Licht (16'') in dem Brennfleck (17'') gebündelt wird.
